# EUROPEAN PATENT SPECIFICATION

(11) **EP 1 998 919 B1**
(45) Date of publication and mention of the grant of the patent: **11.11.2009**
(21) Application number: 07702511.2
(22) Date of filing: 01.03.2007
(51) Int. Cl.: B23B 39/20

(54) **TURRET HEAD HAND-HELD DRILLING MACHINE/DRIVER**
REVOLVERKOPF-HAND-BOHRMASCHINE/ANTRIEBSVORRICHTUNG
MACHINE/MOTEUR DE PERÇAGE TENU(E) À LA MAIN À SUPPORT PORTE-OUTIL À TOURELLE

(30) Priority: 01.03.2006 DK 200600296
(43) Date of publication of application: 10.12.2008
(73) Proprietor: Robatti APS., 8355 Solbjerg (DK)
(72) Inventor: EGELUND, Peter, DK-8355 Solbjerg (DK)
(74) Representative: Gregersen, Niels Henrik
(86) International application number: PCT/DK2007/000105
(87) International publication number: WO 2007/098767

(56) References cited:
- GB-A- 113 862
- US-B1- 6 506 002

## Description

### Field of the Invention

The present invention concerns a hand-held drilling machine/driver of the type where it is possible to change between at least two tool holders mounted in a so-called turret head for rotatable changing where the turret head is released to rotate relative to the machine body by actuating an operating means on the turret head, where the operating means communicates with means which by actuation allow axial displacing of the rotatable part of the tool holder, thereby ensuring separation of the driving line of the machine and release of a rotational lock of the turret head.

### Description of Prior Art

From inter alia US 6,715,969 B2 is known that a hand-held drilling machine/driver may be provided with a so-called turret head where at least two drill heads/tool holders may be mounted. US 6,715,696 B2 discloses a machine where the drive line is established or disconnected, respectively, by performing an axial displacement of coupling means in the machine itself. This means that in the turret head no axial movement of the rotating parts takes place.

In order to rotate the turret head on a machine according to US 6,715,696 B2, a knob disposed at the side of the machine is to be pulled backwards while at the same time turning the turret head. This manoeuvre is cumbersome and requires that one shifts the hold on the machine. Typically, one will operate the machine with the right hand, possibly supporting under the drill head of the machine (at the neck of the machine) with the other hand. In order to rotate the turret head, one is required to change the hold with the right hand to the upper body part of the machine, where the knob may be actuated with the thumb, releasing the turret head, whereafter the turret head is turned with the other hand.

Alternatively, changing between two drill heads may be performed in that the right hand remains on the grip of the machine, and by pressing the knob back with the thumb on the left hand and turning the turret head. By this manoeuvre, left hand and forearm come into close contact with the drill head, which, depending on the tool used for working, may be hazardous if one accidentally activates the start button of the machine. In the above, use of a machine is explained with basis in that the user is right-handed. In the following, there will be similar descriptions which are also based on a right-handed user.

Another variant of a drilling machine/driver with two drill heads is known from US 6,506,002 B1 where different variants of a turret head are described. Common to all variants is that here it is the rotatable part in the turret head which is displaced back and forth axially for engaging and disengaging, respectively. There is indicated a solution where the drill head is pulled forwards manually and is thereby disengaged. This movement tensions a spring element which, when the drill head is engaged, ensures that the connection between drill head and drive means of the machine is maintained. Another variant in US 6,506,002 B1 discloses a system where a tensioned spring disengages the drill head in that a knob is actuated whereby the spring is released. In this variant, the spring is to be tensioned again by holding around the drill head with a hand and pressing it back so that the said knob locks the drill head in the engaged position again.

Both variants - irrespectively of the active direction of the spring - require manual contact with the drill head with the hand. While operating the turret head, the other hand will typically be situated on the handle of the machine with the risk that the start button of the machine may be pressed, and that an accident with the clamped tool may occur.

The purpose of a hand-held drilling machine/driver according to the invention is to indicate a solution in which operation of the turret head of the machine takes place in a secure and comfortable way, where the user does not need to change his hold on the machine, and where the user does not come into physical contact with the tool holder, so that a secure and rapid changing between drill heads/tool holders may be effected.

### Description of the Invention

The novel feature of a hand-held drilling machine/driver is that the machine is provided with an operating means which has a first contact face which by displacing or turning of the operating means is brought in contact with a corresponding contact face connected with the rotatable part of the tool holder, in order to exert a force on the latter for pressing the rotatable part of the tool holder in axial direction and out of engagement with the drive means of the machine.

In this way, by actuating the operating means of the machine, typically a pushbutton, it is possible to force the tool holder concerned and its drive spindle out of engagement with the drive means of the machine. By this actuation there is thus effected an axial displacement of the rotatable part of the tool holder, i.e. a disengagement, while simultaneously releasing the turret head for rotation.

In a preferred embodiment of a drilling machine/driver according to the invention, the operating means is disposed at the neck of the machine (where the machine is typically supported by the left hand) so that the operating means is in immediate vicinity of hand or fingers.

In a particularly preferred embodiment of a hand-held drilling machine/driver according to the invention, the operating means also interacts with locking means ensuring that the rotatable part of the tool holder remains engaged with the drive means of the machine when an axial pull is exerted on the tool holder. In this way inadvertent disengagement is prevented when e.g. a hole is completely drilled and the machine is withdrawn.

In yet a variant of the invention, the axially displaceable and rotatable part of the tool holder is spring biased to engage the drive means of the machine. In this way is achieved a secure coupling of the drive means of the machine and the rotatable part of the tool holder.

According to a further detail in a variant according to the invention, it may be that the rotational lock is adapted so that the rotatable part of the tool holder is released from the drive line of the machine immediately before the rotational lock of the turret head is released from its locked position. Hereby is achieved the advantage that the rotational lock, which e.g. may be a mandrel fitting for a corresponding recess, automatically engages a recess when the turret head is rotated and has reached its desired position. In a preferred embodiment, the rotational lock is loaded by the same spring element which acts on the drive means of the machine until engagement and engagement occurs when the turret head is in exactly the right position and when the rotational lock falls into place in the recess.

A variant of a hand-held drilling machine/driver according to the invention is distinguished in that at least one of the tool holders has an integrated gear, for example a planet gear. With such a variant, there is possibility of using one tool holder with a speed which is different from the other. One speed may e.g. be suited for drilling, while another speed may be suited for screwing tasks.

Yet a variant of a turret head for a drilling machine/driver according to the invention may be with more gears for each single drill head/tool holder which may be changed according to need.

Finally, it is to be mentioned that the preferred embodiments of the invention include that the tool holders are constituted by drill chucks and/or bit holders, or other current systems for mounting tools in drilling/driver machines.

### Short Description of the Drawing

The invention is described in more detail with reference to the drawing, where:
- FIG. 1: shows a sectional drawing of a drilling machine/driver according to the invention.
- FIG. 2: shows details of the turret head on a drilling machine/driver.
- FIG. 3: shows details in a turret head with gear.

### Detailed description of the invention

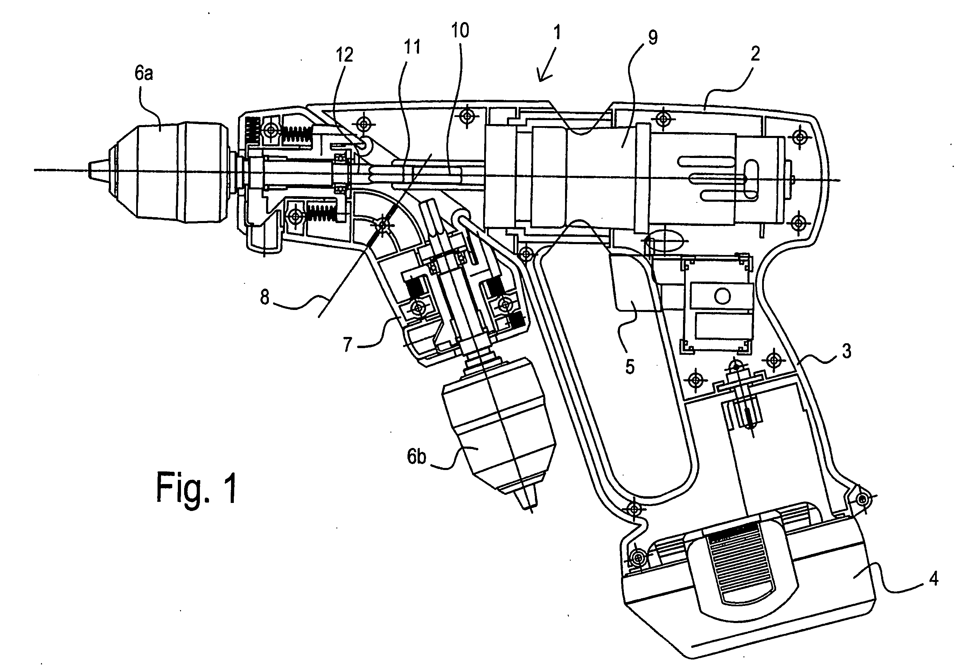

Fig. 1 shows a drilling machine/driver 1 according to the invention. The machine 1 consists mainly of a body part 2, a handle 3, a battery 4, an on/off button 5 and two tool holders 6a and 6b.

More specifically, the tool holders 6 are shown here as common hand-operated drill chucks which are mounted on a turret head 7. The turret head 7 may be turned 360° about the axis 8, whereby it is possible to shift between the two tool holders 6a and 6b.

The tool holders 6 are powered by the motor 9 of the machine which is connected to the battery 4 and the on/off button 5 in a traditional way. Via the drive line 10, the motor 9 is connected to a coupling 11 through which the rotational movement of the drive line is transferred to the rotatable part 12 of the tool holder. The rotatable part 12 of the tool holder as well as the drive line 10 of the machine are suspended in a suitable way and will not be described in detail.

For the sake of good order it is to be mentioned that a machine 1 according to the invention and as described here may be provided with technical properties, such as torque setting, lock for on/off button, right/left rotation, mechanical and/or electric gears, or other properties known from other types of drilling machines/drivers.

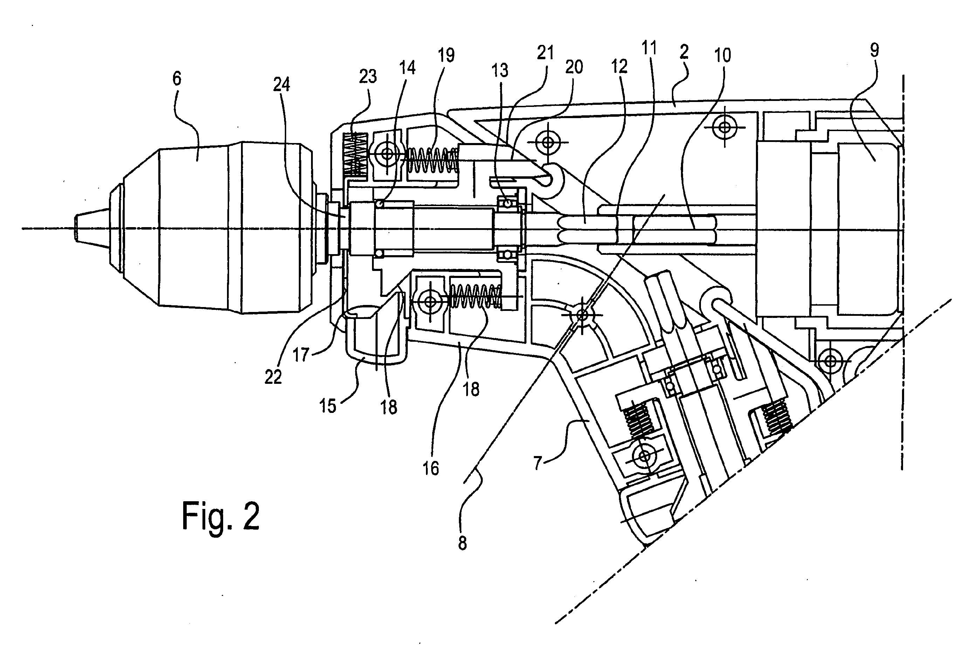

In Fig. 2 appears a detail of the turret head 7 where the elements forming part thereof are clearly seen. The drive line 10 appears extending from the motor 9 and up to the coupling 11 which is shown engaging the rotatable part 12 of the tool holder which is suspended by the bearings 13 and 14. In order to turn the turret head 7 about its axis of rotation 8, the operating means 15 disposed on the neck 16 of the turret head is to be depressed. By actuating the operating means 15, several elements in the turret head 7 are actuated, and turning of the turret head 7 is now enabled.

By actuating the operating means 15, a first inclining contact face 17 is brought to touch an opposed inclining contact face 18, whereby the rotatable part 12 of the tool holder is pressed out of engagement with the coupling 11 of the drive line. As mentioned, activation of the operating means 15 presses the rotatable part 12 of the tool holder out of engagement with the drive line coupling, and simultaneously spring elements 19 are compressed. These spring elements ensure that the rotatable part 12 of the tool holder engages the drive line 10 of the machine via the coupling 11.

At the same time, a rotational lock 20 is actuated which has the object of securing the turret head 7 in a fixed position relative to the body 2 of the drilling machine/driver, so that the drive line 10 of the drilling machine/driver, the coupling 11 and the rotatable part 12 of the tool holder are retained in a fixed line, whereby it is possible to perform work with great precision. The rotational lock 20 engages a recess 21 in the body 2 of the machine, and is adapted so that initial rotation of the turret head 7 is only possible when the drive line 10 is completely interrupted. The spring elements 19 mentioned above furthermore ensure that the rotational lock 20 "automatically" falls in place in the recess 21 when they are aligned.

By actuation of the operating means 15, yet an element in the turret head 7 is actuated, namely the locking means 22 that have the purpose of securing the rotatable part 12 of the tool holder from being pulled out of the coupling 11, and thereby from interrupting the connection to the drive line 10 of the machine if an axial pulling occurs in the tool holder 6 when the drilling machine/driver 1 is e.g. withdrawn after drilling a hole. The locking means 22 is shown here as a locking pawl with through-going hole in which the rotatable part 12 of the tool holder is mounted. By using the machine 1, the locking means 22 are biased by a spring 23 to engage a recess 24 in the rotatable part 12 of the tool holder, whereby the rotatable part 12 cannot be moved in axial direction.

With an operating means 15 arranged as described above, one may release rotational lock 20, rotatable part 12 of the tool holder as well as locking means 22 by one simple and rapid manual action. After releasing, the operating means 15 may be released and the turret head 7 may be turned so that the desired tool holder 6 moves into position, while its rotational lock 20, rotatable part 12 and locking means 22 fall into place thanks to the spring elements 19 and 23.

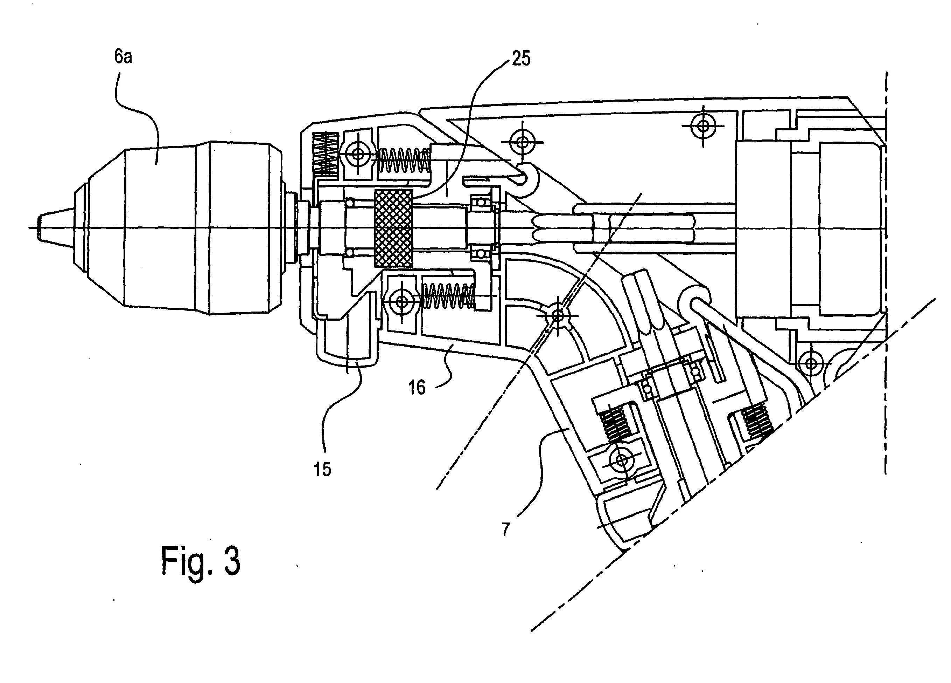

In Fig. 3 appears a variant where a gear 25 is arranged in the turret head 7, more precisely in the neck 16 at the tool holder 6a. The gear 25 may be a planet gear or another type of gear which is suitable. The gear 25 may either be a fixed gearing up (speed increase) or gearing down (speed reduction), but may also be a gear that may shift between a plurality of different steps.

The design of the coupling 11 is not described in detail, but it is inherent in the nature of the invention that prior art methods for coupling together rotating parts may be used freely within the scope of the protection.

For the sake of good order it is mentioned that the invention as described in Figs. 1 - 3 does not specify the invention in its entirety, but is only examples of how the invention can be performed. The scope of the protection is thus not limited to the shown examples, and thus also includes variants which a skilled in the art in the art will be able to provide after receiving knowledge of the invention.

## Claims

1. A hand-held drilling machine/driver of the type where it is possible to change between at least two tool holders (6a, 6b) mounted in a so-called turret head (7) for rotatable changing where the turret head is released to rotate relative to the machine body by actuating an operating means (15) on the turret head, where the operating means communicates with means which by actuation allow axial displacing of the rotatable part of the tool holder, thereby ensuring separation of the driving line of the machine and release of a rotational lock of the turret head, **characterised in that** the operating means has a first contact face (17) which by displacing or turning of the operating means is brought in contact with a corresponding contact face (18) connected with the rotatable part of the tool holder, in order to exert a force on the latter for pressing the rotatable part of the tool holder in axial direction and out of engagement with the drive means of the machine.

2. Hand-held drilling machine/driver according to claim 1, **characterised in that** the operating means interacts with locking means (22) ensuring that the rotatable part of the tool holder remains engaged with drive means of the machine by axial pull in the tool holder.

3. Hand-held drilling machine/driver according to any of claims 1 and 2, **characterised in that** the axially displaceable and rotatable part of the tool holder is spring biased to engage the drive means of the machine.

4. Hand-held drilling machine/driver according to any of claims 1 - 3, **characterised in that** the rotational lock is adapted so that the rotatable part of the tool holder is released from the drive line of the machine immediately before the rotational lock is released from its locked position.

5. Hand-held drilling machine/driver according to any of claims 1 -4, **characterised in that** at least one of the tool holders are with an integrated gear, e.g. a planet gear.

6. Hand-held drilling machine/driver according to any of claims 1 - 5, **characterised in that** at least one of the tool holders is a drill chuck or a bit holder.

## Patentansprüche

1. Von Hand gehaltene(r) Bohrmaschine/Bohrschrauber des Typs, bei dem es möglich ist, zwischen wenigstens zwei Werkzeughaltern (6a, 6b) zu wechseln, die in einem so genannten Revolverkopf (7) montiert sind, um durch Drehen gewechselt zu werden, wenn der Revolverkopf freigegeben ist, um sich relativ zu dem Maschinenkörper durch Betätigen eines Betätigungsmittels (15) am Revolverkopf zu drehen, wobei das Betätigungsmittel mit Mitteln kommuniziert, die durch Betätigung eine axiale Verlagerung des drehbaren Teils des Werkzeughalters zulassen, wodurch die Trennung vom Antriebsstrang der Maschine und die Freigabe einer Drehverriegelung des Revolverkopfes sichergestellt werden, **dadurch gekennzeichnet, dass** das Betätigungsmittel eine erste Kontaktfläche (17) besitzt, die durch Verlagern oder Drehen des Betätigungsmittels mit einer entsprechenden Kontaktfläche (18) in Kontakt gebracht wird, die mit dem drehbaren Teil des Werkzeughalters verbunden ist, um auf den Letzteren eine Kraft auszuüben, um den drehbaren Teil des Werkzeugshalters in axialer Richtung und außer Eingriff mit dem Antriebsmittel der Maschine zu drängen.

2. Von Hand gehaltene(r) Bohrmaschine/Bohrschrauber nach Anspruch 1, **dadurch gekennzeichnet, dass** das Betätigungsmittel mit Verriegelungsmitteln (22) in Wechselwirkung steht, die durch axialen Zug im Werkzeughalter sicherstellen, dass der drehbare Teil des Werkzeughalters mit den Antriebsmitteln der Maschine in Eingriff bleibt.

3. Von Hand gehaltene(r) Bohrmaschine/Bohrschrauber nach einem der Ansprüche 1 und 2, **dadurch gekennzeichnet, dass** der axial verlagerbare und drehbare Teil des Werkzeughalters federvorbelastet ist, um mit den Antriebsmitteln der Maschine in Eingriff zu stehen.

4. Von Hand gehaltene(r) Bohrmaschine/Bohrschrauber nach einem der Ansprüche 1-3, **dadurch gekennzeichnet, dass** die Drehverriegelung dazu ausgelegt ist, den drehbaren Teil des Werkzeughalters von dem Antriebsstrang der Maschine unmittelbar vor der Freigabe der Drehverriegelung aus ihrer verriegelten Stellung freizugeben.

5. Von Hand gehaltene(r) Bohrmaschine/Bohrschrauber nach einem der Ansprüche 1-4, **dadurch gekennzeichnet, dass** wenigstens einer der Werkzeughalter einteilig mit einem Zahnrad, z. B. einem Planetenrad, ausgebildet ist.

6. Von Hand gehaltene(r) Bohrmaschine/Bohrschrauber nach einem der Ansprüche 1-5, **dadurch gekennzeichnet, dass** wenigstens einer der Werkzeughalter ein Bohrfutter oder ein Bohrerspitzenhalter ist.

## Revendications

1. Machine/moteur de perçage tenu(e) à la main du type dans lequel il est possible de changer entre au moins deux porte-outils (6a, 6b) montés dans une dite tête de tourelle (7), pour un changement rotatif dans lequel la tête de tourelle est libérée pour tourner par rapport au corps de la machine en actionnant un moyen opérationnel (15) sur la tête de tourelle, le moyen opérationnel communiquant avec des moyens qui, après avoir été actionnés, permettent le déplacement axial de la partie rotative du porte-outil, assurant ainsi la séparation de la ligne d'entraînement de la machine et la libération d'un blocage de rotation de la tête de tourelle, **caractérisé(e) en ce que** le moyen opérationnel comporte une première surface de contact (17) qui, en déplaçant ou en tournant le moyen opérationnel, est amenée en contact avec une surface de contact (18) correspondante reliée à la partie rotative du porte-outil, de façon à exercer une force sur ce dernier pour appuyer la partie rotative du porte-outil dans une direction axiale et de façon à le désaccoupler du moyen d'entraînement de la machine.

2. Machine/moteur de perçage tenu(e) à la main selon la revendication 1, **caractérisé(e) en ce que** le moyen opérationnel interagit avec un moyen de blocage (22) garantissant que la partie rotative du porte-outil reste accouplée avec le moyen d'entraînement de la machine par une traction axiale dans le porte-outil.

3. Machine/moteur de perçage tenu(e) à la main selon l'une quelconque des revendications 1 et 2, **caractérisé(e) en ce que** la partie déplaçable axialement et rotative du porte-outil est poussée par un ressort pour s'accoupler au moyen d'entraînement de la machine.

4. Machine/moteur de perçage tenu(e) à la main selon l'une quelconque des revendications 1 à 3, **caractérisé(e) en ce que** le blocage rotatif est adapté de telle sorte que la partie rotative du porte-outil soit libérée de la ligne d'entraînement de la machine immédiatement avant que le blocage rotatif ne soit libéré de sa position bloquée.

5. Machine/moteur de perçage tenu(e) à la main selon l'une quelconque des revendications 1 à 4, **caractérisé(e) en ce qu**'au moins l'un des porte-outils comporte un engrenage intégré, par exemple une roue planétaire.

6. Machine/moteur de perçage tenu(e) à la main selon l'une quelconque des revendications 1 à 5, **caractérisé(e) en ce qu**'au moins l'un des porte-outils est un mandrin porte-mèche ou un porte-forets.
